Europäisches Patentamt

European Patent Office

Office européen des brevets

(11) Veröffentlichungsnummer: **0 231 480**
**B1**

(12) **EUROPÄISCHE PATENTSCHRIFT**

(45) Veröffentlichungstag der Patentschrift:
07.02.90

(51) Int. Cl.⁴: **B62D 5/04**

(21) Anmeldenummer: 86116949.8

(22) Anmeldetag: 05.12.86

(54) **Lenkhilfe für Kraftfahrzeuge.**

(30) Priorität: 14.12.85 DE 3544350

(43) Veröffentlichungstag der Anmeldung:
12.08.87 Patentblatt 87/33

(45) Bekanntmachung des Hinweises auf die Patenterteilung:
07.02.90 Patentblatt 90/6

(84) Benannte Vertragsstaaten:
DE FR GB IT SE

(56) Entgegenhaltungen:
DE-A- 1 630 301
DE-A- 2 135 791
FR-A- 2 408 501
GB-A- 2 079 691

(73) Patentinhaber: Adam Opel Aktiengesellschaft,
Bahnhofsplatz 1 Postfach 17 10,
D-6090 Rüsselsheim(DE)

(72) Erfinder: Bausch, Paul, Auf der Irrlitz 30,
D-6229 Hattenheim(DE)
Erfinder: Harth, Klaus-Peter, Wilhelm-Dienst-Strasse 25,
D-6093 Flörsheim(DE)

(74) Vertreter: Rosenfeld, Jürgen, Dipl. Ing. et al, Adam Opel
Ag Patentabteilung Bahnhofsplatz 1 Postfach 17 10,
D-6090 Rüsselsheim(DE)

## Beschreibung

Die Erfindung bezieht sich auf eine Lenkhilfe für Kraftfahrzeuge, mit einem die Handlenkung unterstützenden elektromotorischen Antriebsaggregat, das auf die Lenkspindel in einem der Handlenkung entsprechenden Sinne einwirkt, wobei der Betriebszustand des Antriebsaggregats nicht nur von der Fahrzeuggeschwindigkeit, sondern auch von dem jeweiligen auf das Lenkrad manuell ausgeübten Lenkmoment abhängig ist.

Es ist bekannt, die bei Lenkvorgängen manuell auf das Lenkrad aufzubringenden Kräfte, welche bei niedrigen Fahrzeuggeschwindigkeiten, vornehmlich beim Parkieren, besonders groß sind, durch motorische Hilfskraftaggregate zu unterstützen. Beim diesbezüglichen Stand der Technik, wie ihn die DE-A 23 52 526, 24 31 737, 28 45 864, 32 36 080, 33 36 272, 33 43 180 und 34 02 332 repräsentieren, wird die Hilfskraft durch Elektromotoren aufgebracht und in räumlich, konstruktiv und schaltungstechnisch aufwendiger Weise über Getriebe und komplizierte Kupplungen auf drehende Teile des Lenkgetriebes übertragen.

Außerdem ist es bekannt, das hohe Lenkkraftaufkommen beim Parkieren durch eine aufwendige hydraulische Hilfskraftlenkung zu reduzieren, die andererseits im normalen Fahrbetrieb kaum benötigt wird, jedoch ständig Energie verbraucht.

Stand der Technik auf dem in Rede stehenden Gebiet ist es weiterhin (vgl. DE-A 35 30 001 veröffentlicht 5.3.1987), ein in Abhängigkeit vom manuellen Lenkmoment und von der jeweiligen Fahrzeuggeschwindigkeit zu- bzw. abschaltbares Antriebsaggregat, welches aus einem Elektromotor mit nachgeschalteten Getriebe besteht, unmittelbar in die Lenksäule oder in die Lenkwelle des Lenkgetriebes zu integrieren.

Aufgabe der vorliegenden Erfindung ist es, eine Lenkhilfe der eingangs bezeichneten Art zu schaffen, die sich bei hoher Funktionstüchtigkeit durch einen unkomplizierten Aufbau, eine nur geringes Gewicht und niedrige Kosten auszeichnet.

Gemäß der Erfindung ist eine solche Lenkhilfe gekennzeichnet durch eine Steuerung der Drehzahl des Antriebsaggregats, derart, daß diese bei geringer Fahrzeuggeschwindigkeit und großem manuellen Lenkmoment hoch und bei hoher Fahrzeuggeschwindigkeit und kleinem manuellen Lenkmoment niedrig ist, und ferner dadurch, daß zwischen Antriebsaggregat und Lenkspindel eine Flüssigkeitsreibungskupplung zwischengeschaltet ist.

Die erfindungsgemäße Lenkhilfe beschränkt sich nicht auf eine bloße Zu- oder Abschaltung des elektromotorischen Antriebsaggregats. Vielmehr läßt sich die durch das Antriebsaggregat gewährte Lenkkraftunterstützung stufenlos dosieren, weil erfindungsgemäß die Drehzahl des Elektromotors angesteuert wird. Da die erfindungsgemäß eingesetzte Flüssigkeitsreibungskupplung die Charakteristik hat, ein um so höheres Drehmoment zu übertragen, je größer die Drehzahldifferenz zwischen inneren und äußeren Kupplungslamellen ist, läßt sich vorteilhafterweise bei hoher Drehzahl des Antriebsaggregats eine große Lenkkraftunterstützung und bei kleineren Drehzahlen des Antriebsaggregats eine entsprechend geringer dosierte Lenkkraftunterstützung realisieren.

Eine Flüssigkeitsreibungskupplung (auch "Visko-Kupplung" genannt) ist für sich bekannt und daher auch nicht unmittelbarer Gegenstand der vorliegenden Erfindung. Es wird diesbezüglich beispielsweise auf die DE-C 21 35 791 verwiesen, aus der eine Flüssigkeitsreibungskupplung als solche, einschließlich ihrer Funktionsweise, hervorgeht. Die vorliegende Erfindung bzw. ein wesentlicher Teil derselben wird vielmehr darin gesehen, eine derartige Flüssigkeitsreibungskupplung in einer Kraftfahrzeuglenkung als Bestandteil einer Servolenkung einzusetzen.

Die Vorteile der Erfindung liegen - außer in der Einsparung von Kosten und Gewicht - insbesondere darin, daß die Lenkung so ausgelegt werden kann, daß der Lenkkraftaufwand beim Parken erheblich reduziert, mit ansteigender Geschwindigkeit jedoch direkter wird. Zugleich wirkt hierbei vorteilhafterweise die Flüssigkeitsreibungskupplung dämpfend auf Kräfte, die über die Lenkung als Stöße oder Drehschwingungen ins Lenkrad übertragen werden könnten.

Nach einer bevorzugten Ausführungsform der Erfindung, die sich durch eine raumsparende Anordnung und geringe Zahl der benötigten Übertragungsteile sowie durch ein niedriges Gewicht auszeichnet, wird vorgeschlagen, die Flüssigkeitsreibungskupplung in die Lenksäule zu integrieren, derart, daß die inneren Lamellen mit der Lenkspindel drehfest verbunden sind und das die äußeren Lamellen tragende Kupplungsgehäuse auf der Lenkspindel oder einem anderen Teil der Lenksäule drehbar gelagert ist, und daß das Kupplungsgehäuse durch das Antriebsaggregat in Drehung versetzt wird.

In weiterer vorteilhafter Ausgestaltung der Erfindung dienen als Sensoren zur Erfassung des jeweiligen manuellen Lenkmoments Dehnungsmeßstreifen, die im Lenkrad angeordnet sind, und die jeweilige Fahrzeuggeschwindigkeit wird mittels eines Weggebers, z.B. an der Tachometerwelle oder einem geeigneten Teil des Antriebsstranges, erfaßt.

Zur näheren Erläuterung der Erfindung dienen Ausführungsbeispiele, die in der Zeichnung dargestellt und nachstehend beschrieben sind. Es zeigt:

Fig. 1 eine Pkw-Lenkung mit Lenkhilfe (schematisch), in Seitenansicht,

Fig. 2 die Charakteristik der Flüssigkeitsreibungskupplung nach Fig. 2 (Drehmoment Nm aufgetragen über der Drehzahldifferenz $n_1$ - $n_2$ der Kupplungslamellen),

Fig. 3 die elektronische Steuerung der aus Fig. 1 und 2 ersichtlichen Lenkhilfe, in Blockschaltbild-Darstellung, und

Fig. 4 die Steuerungscharakteristik der Lenkhilfe nach Fig. 1-4 (Kraft N, an der Lenkungs-Zahnstange gemessen, aufgetragen über dem auf das Lenkrad manuell ausgeübten Lenkmoment Nm).

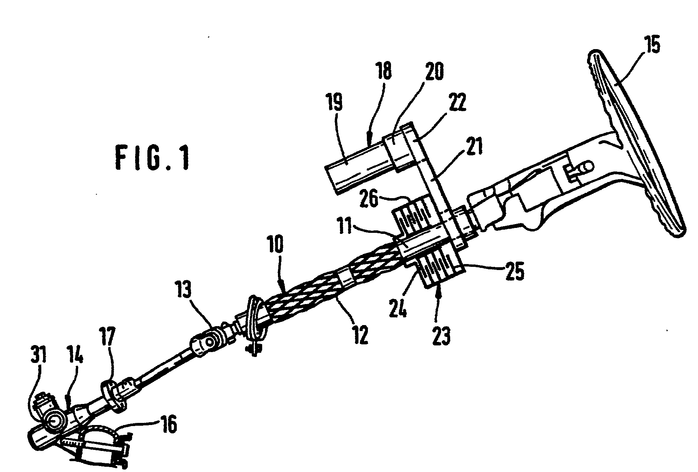

In Fig. 1 bezeichnet 10 die Lenksäule mit Lenkspinkel 11, Stoßenergieabsorber 12, Karbangelenk 13 und Lenkgetriebe 14 einer Pkw-Lenkung. Die Lenkspindel 11 wird durch ein mit 15 beziffertes Lenkrad betätigt. Das Lenkgetriebe 14 ist als Zahnstangen-Lenkgetriebe ausgeführt und sitzt auf einer Quertraverse 16 des im übrigen nicht gezeigten Fahrzeug-Unterbaus. Die Einleitung der Lenkhilfe von der Lenkspindel 11 in das Lenkgetriebe 14 erfolgt über ein schwingungsdämpfendes Gelenk 17.

Zur Verstärkung der manuell auf das Lenkrad 15 aufgebrachten Lenkkraft in bestimmten Betriebssituationen des Fahrzeugs ist ein insgesamt mit 18 bezeichnetes Antriebsaggregat vorgesehen, welches aus einem Gleichstrommotor 19 mit integriertem Planetengetriebe 20 besteht. Zur Kraftübertragung von dem Antriebsaggregat 18 auf die Lenkspindel 11 dient ein Poly-V- oder Zahnriemen 21, der von dem mit 22 bezifferten Abtriebsritzel des Planetengetriebes 20 betätigt wird. Anstelle eines Riementriebes können aber auch ein Kettentrieb oder andere geeignete Übertragungsmittel Verwendung finden.

Die Kraftübertragung erfolgt indessen nicht unmittelbar vom Antriebsaggregat 18 auf die Lenkspindel 11. Vielmehr ist eine sogenannte Flüssigkeitsreibungskupplung 23 (auch "Visko-Kupplung" genannt) zwischengeschaltet, die in Fig. 1 schematisch angedeutet ist. Wie Fig. 1 erkennen läßt, besteht die Flüssigkeitsreibungskupplung 23 im wesentlichen aus zwei radial ineinandergreifenden Lamellensätzen 24, 25, die innerhalb eines abgeschlossenen mit viskoser Arbeitsflüssigkeit gefüllten Kupplungsgehäuses 26 angeordnet sind. Die mit 24 bezifferten inneren Lamellen sind hierbei mittels Keilverzahnung auf der Lenkspindel 11 drehfest angeordnet, wohingegen die äußeren Lamellen 25 mit dem Kupplungsgehäuse 26 fest verbunden sind. Das Kupplungsgehäuse 26, zusammen mit den ihm zugeordneten äußeren Lamellen 25, ist drehbar gegenüber den inneren Lamellen 24 gelagert. Es kann hierbei - wie Fig. 1 andeutet - unmittelbar auf der Lenkspindel 11 oder einem die Lenkspindel umgebenden Mantelrohr der Lenksäule 10 gelagert sein.

Vorteilhaft ist in jedem Fall eine Lagerung beidseitig der Lamellensätze 24, 25.

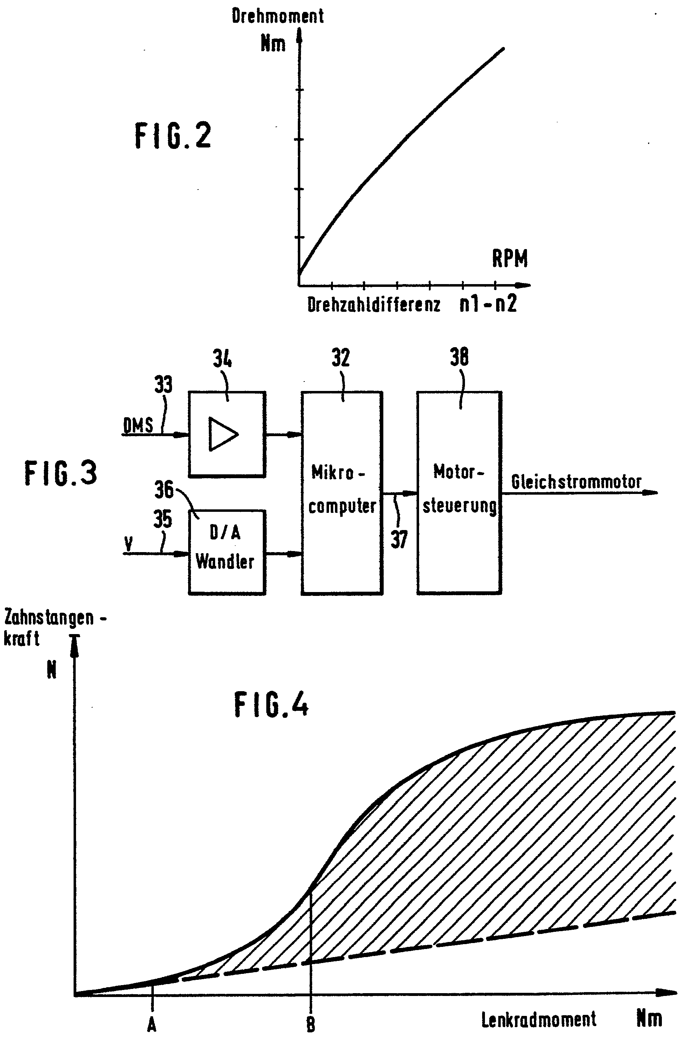

Wird nun das Kupplungsgehäuse 26 durch das Antriebsaggregat 18 in Drehung versetzt, so rotiert der mit dem Kupplungsgehäuse 26 verbundene äußere Lamellensatz 25 mit einer entsprechenden Drehzahl $n_1$, und der innere Lamellensatz 24, angetrieben durch die in Umlauf versetzte Arbeitsflüssigkeit, dreht sich mit einer Drehzahl $n_2$, die von $n_1$ verschieden, d.h. niedriger als $n_1$, ist. Die Größe, des hierbei von der äußeren Lamellen 25 auf die inneren Lamellen 24 und damit auf die Lenkspindel 11 übertragenen Drehmoments hängt - wie Fig. 2 verdeutlicht - von der Drehzahldifferenz $n_1 - n_2$ ab. Demnach ist das übertragene Drehmoment um so höher, je größer der Unterschied zwischen den beiden Drehzahlen $n_1$ und $n_2$ von innerem Lamellensatz 24 bzw. äußerem Lamellensatz 25 ist.

Gesteuert wird im vorliegenden Fall die Drehzahldifferenz $n_1 - n_2$ durch Veränderung der Antriebsdrehzahl $n_1$, was wiederum durch entsprechende Steuerung der Drehzahl des Gleichstrommotors 19 erreicht wird. Da die an der Zahnstange 31 des Lankgetriebes 14 zur Wirkung kommende bzw. benötigte Lenkkraft einer um so stärkeren Unterstützung bedarf, je höher das vom Fahrer manuell am Lenkrad 15 aufzuwendende Lenkmoment ist, soll die Drehzahl des Gleichstrommotors 19 mit steigendem Lenkmoment zunehmen und - umgekehrt - mit sich verringerndem Lenkmoment abnehmen. Zu diesem Zweck sind im Lenkrad 15 Dehnungsmeßstreifen (nicht gezeigt) installiert, die den Gleichstrommotor 19 in Abhängigkeit vom jeweiligen Lenkmoment in besagtem Sinne ansteuern.

Der Gleichstrommotor 19 und damit die Drehzahl $n_1$ soll aber nicht nur in Abhängigkeit vom Lenkmoment, sondern auch als Funktion der jeweiligen Fahrzeuggeschwindigkeit steuerbar sein. Hierfür ist ein Weggeber (nicht gezeigt) vorgesehen, der die Fahrzeuggeschwindigkeit an einer geeigneten Stelle, z.B. an der Tachowelle oder dem Antriebsstrang, mißt und sie - nach entsprechender Umformung in elektrische Signale - an den Gleichstrommotor 19 weiterleitet.

Selbstverständlich erfordert diese Steuerung auf der Basis von zwei Ausgangsgrößen (Lenkmoment einerseits und Fahrzeuggeschwindigkeit andererseits) eine geeignete Koordination der gemessenen Steuergrößen, zu welchem Zweck ein Mikrocomputer 32 vorgesehen ist (vgl. Fig. 3). Fig. 3 macht deutlich, daß die von den Dehnungsmeßstreifen (DMS) kommenden Steuersignale - mit 33 bezeichnet - über einen Verstärker 34 dem Mikrocomputer 32 eingegeben werden. Die anderen, von der Fahrzeuggeschwindigkeit (V) abhängigen Steuersignale - in Fig.3 mit 35 beziffert - gelangen über einen D/A-Wandler (Digital/Analog-Wandler) 36 in den Mikrocomputer 32. Die Ausgangssignale 37 des Mikrocomputers 32 werden dann schließlich in einen Steuerblock 38 eingeleitet, der unmittelbar dem Gleichstrommotor 19 mit entsprechenden Spannungswerten ansteuert.

Aus die im vorstehenden beschriebene Weise wird erreicht, daß der Gleichstrommotor 19 stets eine von der Lenkkraft <u>und</u> der Fahrzeuggeschwindigkeit abhängige Drehzahl ($n_1$) auf die Flüssigkeitsreibungskupplung 23 überträgt. Die in Fig. 4 in Diagrammform veranschaulichte Charakteristik Lenkradmoment-Zahnstangenkraft zeigt, daß die Zahnstangenkraft bis zu einem (noch vergleichsweise niedrigen) Lenkmomentwert "A" ohne Lenkhilfe linear zunimmt. Diese flache und gleichmäßige Steigung der Kurve ist ausschließlich eine Funktion von Lenkgetriebeübersetzung und Lenkradmoment. Von A beginnend steigt dagegen die Zahnstangenkraft steiler an durch die nun einsetzende Servowirkung von Antriebsaggregat 18 und Flüssigkeitsreibungskupplung 23. Hier wird der Bereich "Kurvenfahrt bei normalem Fahrbetrieb" abgedeckt. Bei einem vom Fahrer eingegebenen Lenkradmoment ab dem Wert "B" (einem hohen Lenkmomentwert, der hauptsächlich bei sehr niedrigen Fahrzeuggeschwindigkeiten von gleich oder kleiner 10 km/h, insbesondere beim Parkieren, auftritt) verstärkt sich dann die von Antriebsaggregat 18 und Flüssigkeitsreibungskupplung 23 gemeinsam bewirkte Lenkkraftunterstützung beträchtlich.

**Patentansprüche**

1. Lenkhilfe für Kraftfahrzeuge, mit einem die Handlenkung unterstützenden elektromotorischen Antriebsaggregat, das auf die Lenkspindel in einem der Handlenkung entsprechenden Sinne einwirkt, wobei der Betriebszustand des Antriebsaggregats nicht nur von der Fahrzeuggeschwindigkeit, sondern auch von dem jeweiligen auf das Lenkrad manuell ausgeübten Lenkmoment abhängig ist, gekennzeichnet durch eine Steuerung der Drehzahl (n₁) des Antriebsaggregats (18), derart, daß diese bei geringer Fahrzeuggeschwindigkeit und großem manuellen Lenkmoment hoch und bei hoher Fahrzeuggeschwindigkeit und kleinem manuellen Lenkmoment niedrig ist, und ferner dadurch, daß zwischen Antriebsaggregat (18) und Lenkspindel (11) eine Flüssigkeitsreibungskupplung (23) zwischengeschaltet ist.

2. Lenkhilfe nach Anspruch 1, dadurch gekennzeichnet, daß die Flüssigkeitsreibungskupplung (23) in die Lenksäule (10) integriert ist, derart, daß die inneren Lamellen (24) mit der Lenkspindel (11) fest verbunden sind und das die äußeren Lamellen (25) tragende Kupplungsgehäuse (26) auf der Lenkspindel (11) oder einem anderen Teil der Lenksäule (10) drehbar gelagert ist, und daß das Kupplungsgehäuse (26) durch das Antriebsaggregat (18) in Drehung versetzt wird.

3. Lenkhilfe nach Anspruch 1 oder 2, dadurch gekennzeichnet, daß das elektromotorische Antriebsaggregat (18) aus einem Gleichstrommotor (19) mit integriertem oder angeflanschtem Planetengetriebe (20) besteht, und daß das Kupplungsgehäuse (26) der Flüssigkeitsreibungskupplung (23) durch einen vom Abtriebsritzel (22) des Planetengetriebes (20) betätigten Ketten- oder Riementrieb (21) angetrieben wird.

4. Lenkhilfe nach Anspruch 3, dadurch gekennzeichnet, daß das Kupplungsgehäuse (26) der Flüssigkeitsreibungskupplung (23) durch einen Zahnriemen (21) angetrieben wird.

5. Lenkhilfe nach Anspruch 3, dadurch gekennzeichnet, daß für den Antrieb des Kupplungsgehäuses (26) der Flüssigkeitsreibungskupplung (23) ein Poly-V-Riemen (21) dient.

6. Lenkhilfe nach einem oder mehreren der vorstehenden Ansprüche, dadurch gekennzeichnet, daß als Sensoren zur Erfassung des jeweiligen manuellen Lenkmoments Dehnungsmeßstreifen dienen, die im Lenkrad (15) angeordnet sind.

7. Lenkhilfe nach einem oder mehreren der vorstehenden Ansprüche, dadurch gekennzeichnet, daß die jeweilige Fahrzeuggeschwindigkeit mittels eines Weggebers, vorzugsweise an der Tachometerwelle, erfaßt wird.

8. Lenkhilfe nach Anspruch 6 und 7, dadurch gekennzeichnet, daß die mit den Dehnungsmeßstreifen ermittelten lenkmomentabhängigen Steuersignale (33) - über einen Verstärker (34) - und die vom Weggeber ermittelten fahrzeuggeschwindigkeitsabhängigen Steuersignale (35) - über einen Digital/Analog-Wandler (36) - einem Mikrocomputer (32) zugeführt werden, der dann über einen Steuerblock (38) den Elektromotor (19) des Antriebsaggregats (18) ansteuert (Fig. 5)

**Claims**

1. Servo steering system for motor vehicles, with an electric motor drive unit which assists the manual steering and which acts on the steering spindle in a direction corresponding to manual steering, wherein the operative state of the drive unit depends not only on the vehicle speed, but also on the respective steering moment applied manually to the steering wheel, characterised by control of the speed (n₁) of the drive unit (18), in such a way that the latter is high at low vehicle speed and high manual steering moment, and low at high vehicle speed and low manual steering moment, and furthermore by the fact that a fluid friction clutch (23) is interposed between drive unit (18) and steering spindle (11).

2. Servo steering system according to claim 1, characterised in that the fluid friction clutch (23) is incorporated into the steering column (10), in such a way that the inner plates (24) are non-rotatably connected to the steering spindle (11) and the clutch housing (26) carrying the outer plates (25) is mounted rotatably on the steering spindle (11) or another part of the steering column (10), and the clutch housing (26) is set in rotation by the drive unit (18).

3. Servo steering system according to claim 1 or 2, characterised in that the electric motor drive unit (18) consists of a d.c. motor (19) with built-in or flanged planetary gear mechanism (20), and the clutch housing (26) of the fluid friction clutch (23) is driven by a chain or belt drive (21) operated by the driven pinion (22) of the planetary gear mechanism (20).

4. Servo steering system according to claim 3, characterised in that the clutch housing (26) of the fluid friction clutch (23) is driven by a toothed belt (21).

5. Servo steering system according to claim 3, characterised in that a multiple vee belt (21) serves to drive the clutch housing (26) of the fluid friction clutch (23).

6. Servo steering system according to one or more of the preceding claims, characterised in that wire strain gauges which are mounted in the steering wheel (15) serve as sensors to detect the respective manual steering moment.

7. Servo steering system according to one or more of the preceding claims, characterised in that the respective vehicle speed is detected by means of a displacement pick-up, preferably on the speedometer shaft.

8. Servo stearing system according to claims 6 and 7, characterised in that the steering moment-dependent control signals (33) detected with the wire strain gauges are transmitted via an amplifier (34), and the vehicle speed-dependent control signals (35) detected by the displacement pick-up are transmitted via a digital/analogue converter (36), to a microcomputer (32) which then via a control unit (38) triggers the electric motor (19) of the drive unit (18) (Fig. 5).

**Revendications**

1. Dispositif d'assistance de direction pour véhicules automobiles, comportant un groupe d'entraînement à moteur électrique assistant le braquage manuel et agissant sur l'arbre de direction dans un sens correspondant au braquage manuel, l'état de fonctionnement du groupe d'entraînement ne dépendant pas seulement de la vitesse du véhicule mais également du couple de braquage exercé manuellement sur le volant, caractérisé par une commande de la vitesse de rotation ($n_1$) du groupe d'entraînement (18) de façon que cette dernière soit élevée lorsque la vitesse du véhicule est faible et que le couple de braquage manuel est important et soit faible lorsque la vitesse du véhicule est élevée et que le couple de braquage manuel est faible, et en outre par le fait qu'un coupleur hydraulique (23) est intercalé entre le groupe d'entraînement (18) et l'arbre de direction (11).

2. Dispositif d'assistance de direction selon la revendication 1, caractérisé en ce que le coupleur hydraulique (23) est intégré dans la colonne de direction (10), de façon que les lamelles internes (24) soient rigidement reliées à l'arbre de direction (11) et que le carter de coupleur (26) portant les lamelles externes (25) soit monté tournant sur l'arbre de direction (11) ou sur une autre partie de la colonne de direction (10), et en ce que le carter de coupleur (26) est entraîné en rotation à l'aide du groupe d'entraînement (18).

3. Dispositif d'assistance de direction selon la revendication 1 ou 2, caractérisé en ce que le groupe d'entraînement (18) à moteur électrique se compose d'un moteur à courant continu (19) à train planétaire (20) intégrée ou rapportée par bride, et en ce que le carter de coupleur (26) du coupleur (23) à frottement visqueux est entraîné à l'aide d'une transmission à chaîne ou à courroie (21) actionnée par le pignon mené (22) du train planétaire (20).

4. Dispositif d'assistance de direction selon la revendication 3, caractérisé en ce que le carter de coupleur (26) du coupleur hydraulique (23) est entraîné par une courroie crantée (21).

5. Dispositif d'assistance de direction selon la revendication 3, caractérisé en ce qu'une courroie striée (21) sert à l'entraînement du carter de coupleur (26) du coupleur hydraulique (23).

6. Dispositif d'assistance de direction selon une ou plusieurs des revendications précédentes, caractérisé en ce que des jauges extensiométriques disposées dans le volant (15) servent de capteurs pour la mesure du couple de braquage manuel respectif.

7. Dispositif d'assistance de direction selon une ou plusieurs des revendications précédentes, caractérisé en ce que la vitesse du véhicule est mesurée à l'aide d'un capteur de déplacement, monté de préférence sur l'arbre de tachymètre.

8. Dispositif d'assistance de direction selon les revendications 6 et 7, caractérisé en ce que les signaux de commande (33) dépendant du couple de braquage qui sont obtenus par les jauges extensiométriques et les signaux de commande (35) dépendant de la vitesse du véhicule qui sont obtenus par le capteur de déplacement sont appliqués, les uns par l'intermédiaire d'un amplificateur (34) et les autres par l'intermédiaire d'un convertisseur numérique/analogique (30), à un microprocesseur (32) qui commande ensuite le moteur électrique (19) du groupe d'entraînement (18) par l'intermédiaire d'un bloc de commande (38) (figure 5).

FIG.1

EP 0 231 480 B1

FIG.2

Drehmoment
Nm

RPM

Drehzahldifferenz   n1 - n2

FIG.3

33 DMS

34

36

35 V

D/A
Wandler

32 Mikro-computer

38 Motor-steuerung

37

Gleichstrommotor

Zahnstangen-kraft
N

FIG.4

A          B          Lenkradmoment          Nm